# EUROPEAN PATENT APPLICATION

(11) **EP 3 922 664 A1**
(43) Date of publication of application: **15.12.2021**
(21) Application number: 20179215.7
(22) Date of filing: 10.06.2020
(51) Int. Cl.: C08H 7/00, B27N 3/00, C07G 1/00, C08G 8/38, C08K 5/13, C09J 161/12, C09J 197/00, C08L 97/00, C09J 161/06

(54) **STABLE LIGNIN-PHENOL BLEND FOR USE IN LIGNIN MODIFIED PHENOL-FORMALDEHYDE RESINS**

(71) Applicant: Borealis AG, 1220 Wien (AT)
(72) Inventor: CARMONA, Rebeca Reguillo, 4021 Linz (AT); DICKE, René, 4021 Linz (AT); HERWIJNEN, Hendrikus van, 3464 Hausleiten (AT); ZEPPETZAUER, Franz, 4040 Linz (AT); KAMM, Birgit, 4040 Gramastetten (AT); SOLT-RINDLER, Pia, 1180 Vienna (AT)
(74) Representative: Maikowski & Ninnemann Patentanwälte Partnerschaft mbB

(57) **Abstract**

The invention refers to a stable lignin-phenol blend for use in lignin modified phenolformaldehyde resins comprising lignin in an amount between 10-80 wt%, phenol in an amount between 15-90 wt%, and a solubilizer in an amount between 0% - 25wt%. The invention refers also to a method obtaining such a stable lignin-phenol blend and the use of thereof.

## Description

The present invention relates to a stable lignin-phenol blend, a method for obtaining the same and its use in lignin modified phenol-formaldehyde resins.

### Description

Lignin is an aromatic polymer and a major constituent of wood and other plants. In recent years it has attracted significant attention as a possible renewable substitute to primarily aromatic chemical precursors currently sourced from the petrochemical industry.

Lignin, being a polyaromatic network, has been extensively investigated as a suitable substitute for phenol during production of phenol-formaldehyde adhesives that are used during manufacturing of structural wood products such as plywood, oriented strandboard and fiberboard. During synthesis of such adhesives, lignin, partially replaced by phenol, is reacted with formaldehyde in the presence of either basic or acidic catalyst to form a highly crosslinked aromatic resins.

Currently, only limited amounts of the phenol can be replaced by lignin due to the lower reactivity of lignin. WO 2016/157141 A1 describes a method to obtain activated lignin composition that can be used for synthesizing wood adhesives such as lignin-phenol-formaldehyde resins used in plywood, particle board or wafer board. The lignin composition described comprises aqueous dispersants, aqueous catalysts and lignin.

Another problem of using lignin modified phenol resins on an industrial scale is the low reactivity of the lignin precursors. Thus, the incorporation of lignin into the long-established phenolic resins recipes in an industrial scale has proven to have several disadvantages for the resin producers, which have been a major drawbacks for the implementation of these adhesives in end consumer products.

The incorporation of lignin into the traditional phenol-formaldehyde resins production brings additional technical challenges in at various steps of the production chain: raw material transport (transport conditions, unloading procedure, bulk solids handling), raw material storage (storage design, solids handling, flowability properties, compactation, caking, storage conditions: time, temperature); resin production (processability issues: hydrophobicity, agglomeration, precipitation, homogeneous resins); resin storage (storage design, pumping equipment, storage conditions: time, temperature, long term stability, viscosity increase, sedimentation); plywood manufacturing (processability issues: viscosity, increased curing time, adhesive performance, constant quality profile).

The presently encountered drawbacks are in particular: increase in CAPEX costs due to the use of an additional raw material (lignin); process issues such as deposition and/or precipitation of lignin in the reaction media due to its insoluble characteristics; production of non-homogeneous solutions and therefore non constant resin quality, due to the non-homogeneous character of lignin; low adhesive performance, due to the lowest reactivity of lignin compared to phenol.

Another issue is the dissolving step of lignin during the phenol-resin manufacturing which requires intensive mixing and time. Often the resulting mixture lacks homogeneity and results in high viscosity depending on lignin quality and may end up in issues for defining the cut-off criteria for resin production.

These disadvantages are closely related to the intrinsic nature of lignin, which is neither chemically nor physically homogeneous. Lignin quality depends on geographical and seasonal conditions. Parameters such as particle size distribution, chemical composition and molecular weight distribution vary significantly between production batches or even between samples within the same batch.

Lignin-phenolic resins are typically prepared by mixing the different raw materials lignin, phenol, formaldehyde (or other binder), additives and the required catalysts (acid or basic) under specific conditions, highly dependent on the final use of the resin and the resin manufacturer (see WO 2016/157141 A1).

In another approach a lignin-phenolic-resin is prepared by using fractionated lignin (EP 3 495 375 A1). Here lignin is dissolved in a water / organic solvent mixture, which is subsequently subjected to ultrafiltration through one or more filtration membranes for producing a predetermined number of lignin fractions with lignin of a predetermined range of molecular weight. However, this is a very cost intensive method and not applicable for large scale resin synthesis.

Thus, it is still extremely challenging to obtain lignin-phenolic resins of constant quality and acceptable performance that can be commercialized, especially when increasing the lignin content in the phenolic resin recipe.

Thus, it is an object of the present invention to overcome those drawbacks.

This object is solved by a stable lignin-phenol blend according to the features of claim 1.

### Lignin-phenol blend

Accordingly, a stable lignin-phenol blend for use in lignin modified phenol-formaldehyde resins is provided, wherein the blend comprises
- lignin in an amount between 10 - 80 wt%, preferably 15- 70 wt%;
- phenol in an amount between 15 - 90 wt%, preferably 20 - 85 wt%; and
- a solubilizer in an amount between 0% - 25 wt%.

It is to be understood that further additives may also be included and the sum of all ingredients add always up to 100% in each of the embodiments described herein.

The lignin-phenol blend of the invention overcomes most of the above-mentioned problems by using new lignin-containing raw materials for the wood resin industry: stable lignin-phenol blends, consisting of phenol solutions that incorporate lignin at specific concentrations, and that can be used as a single raw material (stable intermediate) for the production of lignin-phenolic resins and has a performance that is comparable to the standard lignin-phenolic resin. The present lignin-phenol blend is not only stable over at least three weeks, but also does not contain any additional compound, such as formaldehyde.

The lignin used in the present stable lignin-phenol-blend may be of different origin. In one embodiment standard lignin may be used as delivered from the supplier without any pretreatment or after pretreatment. Details of pretreatment procedures are described further below.

In one embodiment the present lignin-phenol blend comprises lignin, such as soluble lignin in an amount between 30 - 60 wt%, preferably between 40-55wt%, phenol in an amount between 30 and 75 wt%, preferably 30% and 70 wt%, more preferably between 40-55wt%; and a solubilizer in an amount between 1-15wt%, preferably 4-10 wt%.

As mentioned above the present lignin-phenol blend may comprise a solubilizer in an amount between 0-25wt%, preferably in an amount between 1-10 wt%; more preferably in an amount between 4-10wt%.

The solubilizer may be water, an aqueous alkaline solution or an alkaline compound.

When using water as solubilizer the amount of water in the lignin-phenol blend is preferably between 4 and 25 wt%, more preferably 4-10wt%.

In case of an aqueous alkaline solution as solubilizer, a NaOH solution may be used. When using NaOH solution as solvent the final amount of water in the lignin-phenol blend may be 1-15 wt%, preferably 3-10 wt%, most preferably 4-8 wt%, and the final amount of NaOH in the lignin phenol blend may be up to 1-10 wt%, preferably 3-7 wt% NaOH.

In case of an alkaline compound as solubilizer, inorganic alkaline compounds such as NaOH, KOH, or organic alkaline compounds, such as triethylamine, dimethylethylamine or triethanolamine, or mixtures thereof, may be used. Thus, it is possible to add an alkaline compound as solid or liquid. In this case the final concentration of e.g. NaOH concentration in the lignin-phenol blend may reach upto 10 wt%, preferably up to 8 wt%.

When using an aqueous alkaline solution or an alkaline compound the pH range of the lignin-phenol blend is between 11 and 14, preferably between 12 and 13.

The present lignin-phenol blend is characterized by a viscosity between 20 and 1500 mPas, preferably between 50 and 1500 mPas, more preferably between 80 and 1200 mPas measured at 25°C in oscillation mode. The present blend has a stability of more than 3 weeks (more than 21 days). Stability and/or stable means that no phase separation, no precipitation, and no agglomeration does occur.

The present stable lignin phenol blend is prepared in a method comprising the steps of:
- providing a fraction of lignin in solid form,
- providing a fraction of liquefied phenol, and
- mixing the fraction of lignin with a fraction of liquefied phenol and a fraction of the solubilizer.

In an embodiment the method comprises the steps of
- providing lignin in an amount between 10-80 wt%, preferably 15 and 60 wt%,
- providing a fraction of liquefied phenol in an amount between 15-90 wt%, preferably 20 and 85 wt%, and
- mixing the soluble lignin with the liquefied phenol and the solubilizer
in an amount between 0 and 25 wt%, for example by stirring.

As mentioned, phenol is provided in a liquefied form. The liquefied state of phenol is essential for the dosage of the lignin. This can be done for example by providing a phenol solution or molten phenol. It is important that phenol remains in a liquid phase for increasing solubility of lignin due to higher temperature. Thus, the addition of lignin to phenols and the subsequent mixing is preferably done at 42°C or higher.

In addition, the homogeneity of the final phenol-lignin- blend is dependent on the velocity of lignin dosage and stirring; i.e. lignin should be added to the liquefied phenol such that any agglomeration or phase separation of lignin particles is prevented and avoided. This can be done for example by increasing the stirring rates, for example to stirring rates of > 600 rpm. The increasing turbulence of the liquid phenol solution prevents agglomeration or phase separation of lignin particles. The stirring rate during the addition of lignin depends also from the speed of adding the lignin.

In an embodiment of the present method phenol is molten or liquefied at 50°C, lignin is dosed to the molten or liquefied phenol and the mixture is stirred at 50°C for a certain time, for example for 30 minutes at 600 rpm.

As described above the solubilizer may be water, an aqueous alkaline solution or an alkaline compound. When using water as solubilizer the amount of water in the lignin-phenol blend is preferably between 4 and 25 wt%, more preferably 4-10wt%. In case of an aqueous alkaline solution as solubilizer, a NaOH solution may be used. When using NaOH solution as solvent the final amount of water in the lignin-phenol blend may be 1-15 wt%, preferably 3-10 wt%, most preferably 4-8 wt%, and the final amount of NaOH in the lignin phenol blend may be up to 1-10 wt%, preferably 3-7 wt% NaOH. In case of an alkaline compound as solubilizer, inorganic alkaline compounds such as NaOH, KOH, or organic alkaline compounds, such as triethylamine, dimethylethylamine or triethanolamine, or mixtures thereof, may be used. Thus, it is possible to add an alkaline compound as solid or liquid. In this case the final concentration of e.g. NaOH concentration in the lignin-phenol blend may reach upto 10 wt%, preferably up to 8 wt%.

The added alkali may act as a stabilizer for the lignin. When using an alkaline solution the pH range of the lignin-phenol blend is between 11 and 14, preferably between 12 and 13.

As described the lignin is mixed with molten or liquefied phenol and a small amount of a solvent. In a specific embodiment the stable lignin-phenol blend can be obtained as follows: mixtures phenol-lignin were prepared and stabilized by mixing pre-treated lignin with molten phenol and a specific amount of water (minimum 4 wt% to a maximum of 10 wt%). In some cases, solubility of lignin in the blend was improved by adding controlled amounts of NaOH at different concentrations (maximum final NaOH concentration in the blend of 25 wt%). The resulting blends were stable for a minimum period of at least 21 days (three weeks) and/or still storage conditions at ambient or room temperature. This period has been defined as an internal benchmark limit, based on experience from conditions at industrial resin manufacturers.

The present method for obtaining a stable lignin-phenol blend has several advantages: lignin source independent from supplier or production process or origin or seasonal influences; lignin incorporated into phenol as a stable blend, liquid at room temperature; constant Lignin-Phenol-Blend quality after applying the specific purification technology for obtaining soluble lignin; low viscosity profile of the Lignin-Phenol-Blend in the range of 50 to 1500 mPa·s; reduced safety risk for phenol delivery: no elevated temperature transportation required for the blends; customized lignin content in blend, up to 80 wt%: optimizing logistic chain and customers resin manufacturing.

### Pretreatment of lignin:

As mentioned above lignin used in the present stable lignin-phenol-blend may be of different origin and suppliers, in particular from sources such as Kraft lignin, lignosulphonate, soda lignin or organosolv lignin. It is to be understood that the lignin used as starting material may contain a certain amount of water. The dry matter content of the starting lignin may between 60 and 99%, preferably between 65 and 98%, more preferably between 70 and 95%.

The lignin may be used without pretreatment or after pretreatment. The pretreatment may be mechanically or by extraction.

Thus, in one embodiment the lignin may be treated by milling or sieving before use. For example, lignin as delivered from a suitable supplier may be sieved using a sieve with a mesh size between 500 and 1000 µm, preferably 700 and 800 µm.

In yet another embodiment soluble lignin is used. "Soluble lignin" refers thereby to a mixture of dissolved and finely dispersed lignin that is able to form stable blends. Soluble lignin used in the present blend refers to the lignin fraction that is soluble in a mixture of water/organic solvent (such acetone or ethanol) at determined water-to-organic solvent ratios. The term "soluble" Lignin is due to fractionation of the raw material by extraction with organic solvents. The preparation and properties of the soluble lignin as used in the present lignin-phenol-blend is described in more detail further below.

Soluble lignin is obtained by solvent extraction of lignin from a suitable lignin source.
Solvent fractionation gives the ability to generate lignins with optimized properties. In solvent fractionations of lignin, various interactions with the solvent used in the fractionation isolate lignin of completely altered properties. The solvent fractionation enables separating lignin with respect to the molecular weights. Solvent fractionation of lignin has been used in biorefinery processes and explored with different types of lignin with a variety of solvents under different conditions.

In particular, the soluble lignin is obtained by
- mixing a suitable lignin source with an organic solvent, in particular an aqueous organic solvent, in particular an acetone/ water or ethanol /water mixture, at temperature range of 20 - 50°C to obtain a dispersion;
- separating the soluble lignin fraction from the insoluble lignin fraction, for example by centrifuging, decantation, siphonication, sedimentation, or filtration, and
- evaporating the organic solvent, in particular the aqueous solvent, from the soluble lignin fraction to obtain solid soluble lignin.

In a preferred embodiment the centrifugation of the dispersion for separating soluble and insoluble lignin fractions is carried out at at least 4000 rpm (15.8 g-force). The centrifugation speed and the resulting gravity force are limited by the material (such as PP, HDPE) used for centrifugation containers such as tubes or bottles.

In case filtration is used to separate the soluble lignin fraction from the insoluble lignin fraction it is to be understood that conventional filtration methods areused, i.e. no ultrafiltration or any type of filtration requiring membranes.

Evaporation of the organic solvent is preferably done at temperatures between 40 and 50 °C at a vacuum <200 mbar. During the evaporation of acetone as solvent the procedure should be started slowly because of possible boiling retardations.

The ratio of organic solvent to water may vary between 100 : 0 and 10 : 90, in particular between 70 : 30 and 30 : 70, more in particular between 60 : 40 and 40 : 60. Preferred solvent / water ratios are 100:0. 90:10, 80:20, 60:40 or 40:60. By choosing the appropriate organic solvent / water ratio it is possible to provide soluble lignin with varying molecular weight.

In a specific embodiment the soluble lignin fraction can be obtained as follows: The desired amount of lignin was dissolved in specific acetone-water-mixtures, hereafter called "solvent", where the amount of acetone varied from 10 vol% to 100 vol%. The mixture lignin/solvent was stirred for one hour at room temperature. After that time, the mixture was centrifuged for 20 min at about 16 g-force and either finally dried at 60°C or the excess of organic solvent removed. The resulted lignin fractions are called "soluble lignin" either in dry, solid form or in a water wet state.

In a preferred solvent extraction procedure lignin and solvent are mixed in a ratio 1(lignin) to 10 (solvent mixture) and stirred for example at room temperature for 1 hour followed by centrifugation at 15,8 g and drying for example at T= 60°C.

The soluble lignin obtained by this extraction method is homogenous independent from origin, production process and lignin supplier. The soluble Lignin contains a more homogeneous polymer fraction, resulting in higher blend stability and a better storage performance without phase separation. The present method for obtaining the soluble lignin does not require ultrafiltration steps including filtration membranes and is thus very cost efficient.

The yield of soluble lignin obtained after extraction is between 60-95%, preferably between 70-92%, more preferably between 75 and 90%. The number average molecular weight Mₙ of the soluble lignin is between 1000 and 1200, preferably between 1100 and 1200. The weight average molecular weight Mw of the soluble lignin is between 3000 and 8000, preferably between 3500 and 6000, more preferably between 3800 and 5000. The polydispersity of the soluble lignin is between 2 and 5, preferably between 2.5 and 4.7, more preferably between 3.0 and 4.6. The ash content of the soluble lignin is between 0.5 and 3 %, preferably between 0.7 and 2.7%, more preferably between 0.8 and 1.5wt%. The phenolic OH groups of the soluble lignin are between 2.5 and 4.5 mmol/g, preferably between 3 and 4 mmol/g, more preferably between 3.5 and 4 mmol/g. The methoxy groups of the soluble lignin are between 4 and 6 mmol/g, preferably between 4.3 and 5.7 mmol/g, more preferably between 4.35 and 5.6 mmol/g. The amount of total carbohydrates in the soluble lignin is between 2 and 6%, preferably between 2.3 and 5.5 %, more preferably between 2.5 and 3.5%.

### Lignin modified phenol-formaldehyde resin:

The present stable lignin-phenol blend can be used for preparing lignin modified phenol-formaldehyde resins.

The use of such a blend also provides several advantages: reduced production times due to usage of premixed lignin-phenol blend, low viscosity profile allows easy control of production process until reaching final resin viscosity level which is one criterion for cut-off the condensation reaction with formaldehyde.

Such lignin modified phenol-formaldehyde resins are obtainable by reacting the stable lignin-phenol blend with formaldehyde.

Formaldehyde is added to the lignin phenol-blend in an amount such that a formaldehyde / phenol ratio of 1.5 - 2.5 mol/mol, preferably of 2 mol/mol and a formaldehyde / lignin ratio of 0.15 - 0.25 mol/mol, preferably of 0.2 mol/mol is adjusted. NaOH is added stepwise till a final ratio of NaOH / Phenol of 0.5 - 1 mmol/l, preferably 0.8 mol/mol is adjusted. The solid content of the modified phenol-formaldehyde resin obtained in the aqueous dispersion is about 40-65wt%, preferably 45-55wt%.

As will be described in more detail in the experimental section the use of the stable lignin-phenol blend according to the invention allows a certain condensation time or synthesis time after mixing with formaldehyde. It turned out that after adding formaldehyde to the present lignin-phenol blend the viscosity of the resin reaction mixture is in an optimal range to allow a proper resin synthesis and also allow the control of the synthesis. The condensation time until a viscosity of the resin reaction mixture of about 500 mPas is obtained is about 90 min. The longer condensation time allows for achieving the required parameters in the final wood composite boards. In contrast, when using comparative lignin sources the viscosity of the resin is too high right from the beginning of the condensation reaction. This causes a reduction of the resin synthesis time and finally the performance of the wood composite boards when such adhesive is used (see results in the experimental section).

The lignin modified phenol-formaldehyde resins obtained in this manner show a similar adhesive performance as a reference resins (as illustrated in the figures). Resins were compared against LPF resins prepared by the conventional way simply by mixing lignin, phenol and formaldehyde, wherein the molar ratio (Phenol: Lignin: Formaldehyde) of the reference resins is equal to the present resins. In addition, the present resins are also compared against standard phenol resins (with no lignin content).

### Wood composite board:

As mentioned the lignin modified phenol formaldehyde resin can be used as adhesive in a wood composite board. These wood composite boards are characterized by an average tensile shear strengths (N/mm2) between 1.2 and 2.0, preferably 1.6 and 1.7. These numbers are essentially equivalent to the ones of wood composites prepared with an adhesive containing lignin, phenol and formaldehyde but without using a lignin-phenol blend as an intermediate. It is thought that the stable lignin-phenol-blend according to the invention provides a sufficient homogenization of the lignin within the resin mixture and allows thus a sufficient reaction, while this is not the case in the comparative examples.

The present invention is explained in more detail by means of the following examples with reference to the Figures. It shows:
- Figure 1: a diagram illustrating the tensile strength development according to ASTM D7998 - 15 measured on beech veneers obtained with the lignin modified phenol-formaldehyde resin according to the invention;
- Figure 2: a diagram illustrating the condensation time and viscosity of lignin modified phenol-formaldehyde resin according to the invention and comparative examples (excluding the time for dissolution of lignin in adhesive mixture).

### I) lignin raw materials

Softwood Kraft Lignin from different supplier is used as starting material. The molecular mass of soluble Lignin is determined by Size Exclusion Chromatography equipped with an ultraviolet detector using 0.1 M sodium hydroxide solution as solvent. Concerning the quantification, Polystyrene standards are used for the calibration. The reactivity of Lignin for blend and adhesive preparation depends on the concentration of hydroxyl groups and methoxyl groups in the polymer backbone. In laboratory, hydroxyl and methoxyl groups are determined as sum parameters. The ratio of the sum parameters and the molecular mass determination show a basic characterization of the reactivity of the Lignin. Analytical results of used Lignins are shown in table 1.

**Table 1: Data sheet of used soluble lignins**

| | Lignin 1 | Lignin 2 | Lignin 3 |
|---|---|---|---|
| Dry matter / % | 97.0 | 68.0 | 67.3 |
| Ash / % | 2.7 | 0.6 | 0.8 |
| Acid Soluble Lignin / % | 0.5 | 0.3 | 2.1 |
| Acid Insoluble Lignin / % | 92.0 | 93.0 | 96 |
| Total carbohydrates /% | 2.2 | 5.8 | 2.4 |
| Phenolic OH / mmol/g | 3.5 | 4.0 | 3.0 |
| Methoxy Group / mmol /g | 5.7 | 5.3 | 5.3 |
| M_{N} | 1196 | 1095 | 1105 |
| M_{W} | 5534 | 4695 | 4755 |
| DP | 4.6 | 4.3 | 4.3 |

### II) Soluble lignin

### Extraction of soluble lignin

The lignin was first pre-treated by a simple milling process for homogeneity reasons. Then, 15g of the lignin was dosed portionally into 150 ml water/acetone solvent mixture. That mixture is stirred for 1 hour at room temperature and subsequently centrifugated for 20 min at 8500 rpm (16 g-force). The organic solvent/water is then removed by an evaporation step, usually done at reduced pressure conditions and finally dried in an oven at 60°C.

The following table 2 illustrates the different extraction examples:

**Table 2: extraction of Lignin with different water acetone ratios (RT = room temperature; S = Soxhlet-extraction process)**

| **PL#** | **Supplier** | **Pretreatment** | **Acetone [%]** | **Water [%]** | **Yield [%]** | **Mw** | **Mn** | **Polydispersity** |
|---|---|---|---|---|---|---|---|---|
| **1** | Lignin 1 | None | | | | 5534 | 1196 | 4,63 |
| **2** | Lignin 1 | Milled | | | | 5534 | 1196 | 4,63 |
| **3** | Lignin 1 | Frac 60% Ac S | 60 | 40 | 74 | n.a. | n.a. | n.a. |
| **4** | Lignin 1 | Frac 100% Ac S | 100 | 0 | 77 | n.a. | n.a. | n.a. |
| **5** | Lignin 1 | Frac 40% Ac S | 40 | 60 | 64 | n.a. | n.a. | n.a. |
| **6** | Lignin 1 | Frac 40% Ac RT | 40 | 60 | 76 | 2340 | 596 | 3,92 |
| **7** | Lignin 1 | Frac 60% Ac RT | 60 | 40 | 85 | 5063 | 1068 | 4,75 |
| **8** | Lignin 1 | Frac 90% Ac RT | 90 | 10 | 82 | 6741 | 1328 | 5,07 |
| **9** | Lignin 1 | Frac 100% Ac RT | 100 | 0 | 78 | 3086 | 1092 | 2,83 |
| **10** | Lignin 1 | Milled | | | | 5534 | 1196 | 4,63 |
| **11** | Lignin 1 | Milled | | | | 5534 | 1196 | 4,63 |
| **12** | Lignin 1 | Frac 100% Ac RT | 100 | 0 | 78 | 3086 | 1092 | 2,83 |
| **13** | Lignin 2 | None | | | | 5155 | 1264 | 4,18 |
| **14** | Lignin 2 | Milled | | | | 5155 | 1264 | 4,18 |
| **15** | Lignin 2 | Frac 100% Ac RT | 100 | 0 | 85 | 4072 | 1192 | 3,32 |
| **16** | Lignin 2 | Milled | | | | 5155 | 1264 | 4,18 |
| **17** | Lignin 2 | Frac 100% Ac RT | 100 | 0 | 85 | 4072 | 1192 | 3,32 |
| **18** | Lignin 3 | None | | | | 4755 | 1105 | 4,3 |
| **19** | Lignin 3 | Milled | | | | 4755 | 1105 | 4,3 |
| **20** | Lignin 3 | Frac 100% Ac RT | 100 | 0 | 86 | 3677 | 1152 | 3,19 |
| **21** | Lignin 3 | Milled | | | | 4755 | 1105 | 4,3 |
| **22** | Lignin 3 | Frac 100% Ac RT | 100 | 0 | 86 | 3677 | 1152 | 3,19 |

The molar mass distributions of solutions of the lignin samples in NaOH are performed by size exclusion chromatography on a Thermo Fisher Dionex ICS 5000+. The chromatographic system consists of a pre-column PSS MCX Guard 50 x 8 mm and three analytical (PSS Analytical 100A, 300 x 8 mm ; PSS Analytical 1000A, 300 x 8 mm; PSS Analytical 100000A, 300 x 8 mm) columns. The UV detector used is a VWD detector with 280 nm as standard wavelength. Molar mass calibrations are carried out using Polystyrene standards.

### III) Soluble lignin - Phenol - Blend

### First blend according to the invention (Blend A1)

146g phenol is heated up to 60°C, 4.3g water is added and continuously stirred at 800rpm in a bottom-round flask using a magnetic stirrer. When phenol is completely liquified, 50g sieved lignin powder is added stepwise to ensure no agglomeration, which takes 30min. The final blend with a phenol:lignin (calc. on dry matter) of 75:25 is cooled down and stored at room temperature.

### Second blend according to the invention (Blend B1)

In a round bottom flask, 120g powdered softwood kraft lignin is dissolved in 1.2L 99.9% acetone and stirred at 800rpm with a magnetic stirrer. After mixing for one hour, the acetone with the dissolved lignin is decanted from the insoluble lignin. The resulting solution is concentrated by evaporation of the acetone followed by drying at 60°C for 48h.

For the blend production with 50% phenol substitution, 70.0g phenol is melted at 60°C, 4.2g water is added and continuously stirred at 800rpm in a bottom-round flask using a magnetic stirrer. When phenol is completely molten, 70.0g of the acetone soluble, dried lignin is added stepwise to ensure no agglomeration, which takes 2,5h. The final blend is cooled down and stored at room temperature. The blend is stable for more than 3 weeks at room temperature.

A general preparation for obtaining the lignin-phenol-blends comprises:
- 220 g of 25%-lignin containing PL Blend ()
- 160.2 g of Phenol, 53.4 g of Lignin, 6.4 g of distilled water
- Phenol melting (60°C), Stirring with 900 rpm
- Dosage of Lignin (25 min, 60°C), Stirring with 1140 rpm
- Stirring (25 min, 60°C), Stirring at 1140 rpm

In the following Table 3 the synthesis of further lignin-phenol-blends according to the invention are provided.

**Table 3**

| **PL#** | **Supplier** | **Pretreatment** | **Phenol [%]** | **Water [%]** | **NaOH [%]** | **Lignin [%]** | **Storage [days]** |
|---|---|---|---|---|---|---|---|
| **1** | Lignin 1 | None | 86 | 4 | | 10 | >21 |
| **2** | Lignin 1 | Milled | 81 | 4 | | 15 | >21 |
| **3** | Lignin 1 | Frac 60% Ac S | 71 | 4 | | 25 | >21 |
| **4** | Lignin 1 | Frac 100% Ac S | 71 | 4 | | 25 | >21 |
| **5** | Lignin 1 | Frac 40% Ac S | 71 | 4 | | 25 | >21 |
| **6** | Lignin 1 | Frac 40% Ac RT | 71 | 4 | | 25 | >21 |
| **7** | Lignin 1 | Frac 60% Ac RT | 71 | 4 | | 25 | >21 |
| **8** | Lignin 1 | Frac 90% Ac RT | 71 | 4 | | 25 | >21 |
| **9** | Lignin 1 | Frac 100% Ac RT | 46 | 4 | | 50 | >21 |
| **10** | Lignin 1 | Milled | 46 | 3 | 1 | 50 | >21 |
| **11** | Lignin 1 | Milled | 60 | | 10 | 30 | >21 |
| **12** | Lignin 1 | Frac 100% Ac RT | 36 | 3 | 1 | 60 | >21 |
| **13** | Lignin 2 | None | 76 | 4 | | 20 | >21 |
| **14** | Lignin 2 | Milled | 76 | 4 | | 20 | >21 |
| **15** | Lignin 2 | Frac 100% Ac RT | 36 | 4 | | 60 | >21 |
| **16** | Lignin 2 | Milled | 46 | 3 | 1 | 50 | >21 |
| **17** | Lignin 2 | Frac 100% Ac RT | 26 | 3 | 1 | 70 | >21 |
| **18** | Lignin 3 | None | 76 | 4 | | 20 | >21 |
| **19** | Lignin 3 | Milled | 76 | 4 | | 20 | >21 |
| **20** | Lignin 3 | Frac 100% Ac RT | 36 | 4 | | 60 | >21 |
| **21** | Lignin 3 | Milled | 46 | 3 | 1 | 50 | >21 |
| **22** | Lignin 3 | Frac 100% Ac RT | 26 | 3 | 1 | 70 | >21 |

### IV) Lignin modified phenol formaldehyde Resin

The stable lignin-phenol blends were used for producing a lignin-phenol-formaldehyde resin. The general target values for such a resin are summarized in the following scheme:

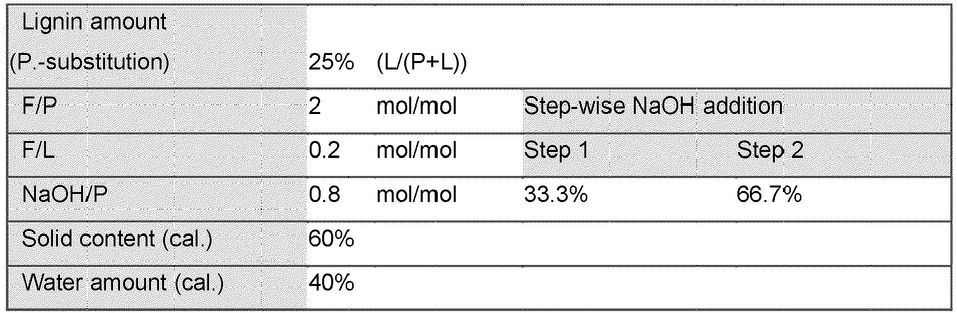

### First Lignin modified phenol formaldehyde resin according to the invention (resin A2, LP-Blend F)

To 177,4g of blend A1, 37g of 40% aqueous NaOH-solution, was added and stirred at 65°C. A 226,7 g of formaldehyde solution (37%) and then 58,6g a 50% NaOH solution were constantly added over 30 minutes for each. The adhesive was further condensed at an elevated temperature of 80°C until the viscosity increased to 500mPa*s and then immediately cooled down.

### Second Lignin modified phenol formaldehyde resin according to the invention (resin B2)

Blend B1 was condensed with concentrated formalin at a formaldehyde to phenol molar ratio of 2.35 at a temperature of at least 80°C. Aqueous NaOH was used as catalyst and added in multiple portions until a NaOH to phenol molar ratio of 1.1 was reached. The reaction was stopped by cooling upon reaching the desired viscosity of 500 mPas.

### Comparative Example A (LPF):

For the reference sample, 36,7g crystalline phenol was melted at 65°C and 12,2g powdered kraft lignin and after a short time 13,7g 42% NaOH solution was added. At a constant temperature, the mixture is stirred and over a period of 30min 64,5g of formaldehyde (37%) solution and then 22,9g 50% NaOH solution are added. The mixture is heated up to 85°C and condensed to a final viscosity of approx.. 500mPa*s. After reaching the target viscosity, the mixture is immediately cooled down to room temperature.

### Comparative Example B (LPF):

Phenol and lignin in a 1:1 mass ratio were condensed with concentrated formalin at a formaldehyde to phenol molar ratio of 2.35 at a temperature of at least 80°C. Aqueous NaOH was used as catalyst and added in multiple portions until a NaOH to phenol molar ratio of 1.1 was reached. The reaction was stopped by cooling upon reaching the desired viscosity of 500 mPas.

When comparing lignin-phenol-formaldehyde resin A2 (LP-Blend F) with a standard blend a (LPF) it is apparent that the properties of both resins are essential the same (see Table 4 below). Thus, the lignin-phenol-formaldehyde resin A2 according to the invention can be used in the same manner and for the same purposes as the standard resin.

**Table 4**

| | LP-Blend F | LPF |
|---|---|---|
| Lignin:Phenol | 25:75 | 25:75 |
| Solid content [%] | 49 | 49 |
| Viscosity [mPa*s] | 400-600 | 400-600 |
| pH (50% in water) [-] | 11-12 | 11-12 |
| Free Formaldehyde [%] | 0.1 | 0.1 |

In Table 5 the synthesis of further lignin modified-phenol-formaldehyde resins are provided.

**Table 5**

| | **Info** | | **Lignin A** | **Lignin A -blend** | **Lignin B** | **Lignin B -blend** | **Lignin C** | **Lignin C -blend** |
|---|---|---|---|---|---|---|---|---|
| **Molecular Weight av.** | MW | g/mol | 5534 | | 4695 | | 4755 | |
| **Polydispersity index** | PDI | | 4.6 | | 4.3 | | 4.3 | |
| **Solid Content** | 1g, 140°C, 3h | % | 49.5% | 49.4% | 49.1% | 49.0% | 49.1% | 47.1% |
| **Viscosity 24h after condensation** | 100 1/s, days 1, 20°C | mPa*s | 642 | 430 | 576 | 320 | 453 | 365 |
| **pH** | (50% water) | | 11.2 | 11.2 | 11.7 | 11.2 | 11.7 | 11.3 |
| **Free Formaldehyde** | Titration in water | % | 0.1 | 0.1 | 0.1 | 0.1 | 0.1 | 0.1 |
| **B-Time** | 120°C | s | 91 | 99 | 72 | 76 | 85 | 112 |

### IV) Wood composite board comprising Lignin modified phenol-formaldehyde resin

The following method is used to test the adhesive strength, which explains the effect of the invention:
The adhesive mixtures produced according to examples A2 and B2 were tested according to EN 314-1 and evaluated according to EN 314-2. For this purpose, 9-ply plywood boards with a glue application of 155g/m² were produced and pressed at 130°C for 20min in a hydraulic press. The hardened compound was air-conditioned after cutting to samples for 7 days at standard climate (20°C/65%r.h.). Half of the sample was stored for 24 hours in 20°C warm water and the other half was immersed in boiling water for 6 hours and then cooled down in water at 20°C for 1 hour. For Example B and B2, also criteria 3 (immersion for 4h boiling water followed by 16-20 h of drying, 4h in boiling water and 1h cooling in water) of the standard were tested. The determined average tensile shear strengths (N/mm²) of the examples given are summarized in the following table 6.

**Table 6**

| Treatment of plywoods | Comparative example A | Example A2 | Example B2 | Comp. Example B |
|---|---|---|---|---|
| immersion for 24h in water (20°C) | 1.6 N/mm² | 1.6 N/mm² | Not tested | Not tested |
| immersion for 6h boiling water followed by 1h cooling in water | 1.2 N/mm² | 1.2 N/mm² | 1.7 N/mm² | decomposed |
| immersion for 4h boiling water followed by 16-20 h of drying, 4h in boiling water and 1h cooling in water | Not tested | Not tested | 1.3 N/mm² | Decomposed |

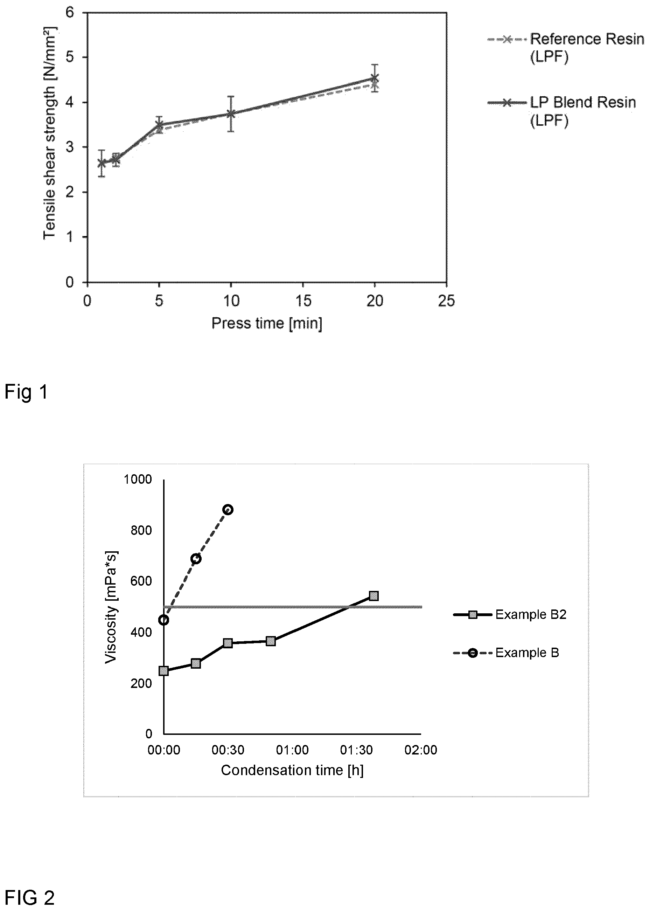

The diagram of Figure 1 shows the tensile strength of a plywood board obtained with the lignin modified phenol-formaldehyde resin A2 (LP-Blend F) and a standard resin (LPF). As clearly deducible, the tensile strength is essentially the same in both cases.

The diagram of Figure 2 illustrates the condensation time and viscosity of lignin modified phenol-formaldehyde resin according to the invention and comparative example B and a further comparative example.

As can be seen when using the lignin modified phenol formaldehyde resin according to the invention (Example B2) a viscosity of 500 mPas (as target criteria for the resin manufacturing) is reached after about 90 min condensation time. The longer condensation time allows for achieving the required parameters in the final wood composite boards.

In contrast, when using comparative lignin sources (Example B) the viscosity of the resin is too high right from the beginning of the condensation reaction. This causes a reduction of the resin synthesis time and finally the performance of the wood composite boards when such adhesive is used (see results in the experimental section).

## Claims

1. Stable lignin-phenol blend for use in lignin modified phenol-formaldehyde resins comprising
- lignin in an amount between 10-80 wt%,
- phenol in an amount between 15-90 wt%, and
- a solubilizer in an amount between 0-25 wt%.

2. Lignin-phenol blend according to claim 1, **characterized by**
- lignin in an amount between 15-70 wt%, preferably 30 - 60 wt%, preferably 40-55wt%
- phenol in an amount between 20-85 wt%, preferably 30 and 70 wt%, preferably 40% and 55wt%; and
- a solubilizer in an amount between 1- 15wt%, preferably 4-10 wt%.

3. Lignin-phenol blend according to claim 1, **characterized in that** the solubilizer is water, an aqueous alkaline solution or an alkaline compound.

4. Lignin-phenol blend according to one of the preceding claims, **characterized in that** when using an aqueous alkaline solution or an alkaline compound as solubilizer the pH range of the lignin-phenol blend is between 11 and 14, preferably between 12 and 13.

5. Lignin-phenol blend according to one of the preceding claims, **characterized in that** the lignin is pretreated, for example mechanically or by extraction.

6. Lignin-phenol blend according to one of the preceding claims, **characterized by** a stability of more than 3 weeks.

7. Method for preparing a stable lignin-phenol blend according to one of the preceding claims comprising the steps of:
- providing a fraction of lignin in solid form,
- providing a fraction of liquefied phenol, and
- mixing the fraction of lignin with a fraction of liquefied phenol and a fraction of the solubilizer.

8. Method according to claim 7, **characterized by**
- providing lignin in an amount between 10 and 80 wt%,
- providing a fraction of liquefied phenol in an amount between 15 and 90 wt%, and
- mixing the soluble lignin with the liquefied phenol and the solubilizer with an amount between 0 and 25 wt%.

9. Method according to one of the claims 7 - 8, **characterized in that** the solubilizeris water, an aqueous alkaline solution or an alkaline compound.

10. Method according to one of the claims 7-9, **characterized in that**, the lignin is pretreated, for example mechanically or by extraction.

11. Method according to one of the claims 7-10 **characterized in that** the lignin is pretreated by
- mixing a suitable lignin source with an organic solvent, preferably an aqueous organic solvent at room temperature to obtain a dispersion;
- separating soluble and insoluble fraction of lignin, and
- evaporating the organic solvent, in particular the aqueous organic solvent, from the soluble lignin fraction to obtain solid soluble lignin.

12. Use of a stable lignin-phenol blend according to one of the claims 1-6 for preparing lignin modified phenol-formaldehyde resins.

13. Lignin modified phenol-formaldehyde resins obtainable by reacting a stable lignin-phenol blend according to one of the claims 1-6 and an aldehyde, in particular formaldehyde.

14. Wood composite board comprising at least one Lignin modified phenol-formaldehyde resin according to claim 13.
